(19) Europäisches Patentamt
European Patent Office
Office européen des brevets

(11) EP 1 659 141 B1

(12) # EUROPEAN PATENT SPECIFICATION

(45) Date of publication and mention of the grant of the patent:
**21.04.2010 Bulletin 2010/16**

(21) Application number: **04772382.0**

(22) Date of filing: **23.08.2004**

(51) Int Cl.:
***C08G 59/24*** *(2006.01)*

(86) International application number:
**PCT/JP2004/012426**

(87) International publication number:
**WO 2005/019298 (03.03.2005 Gazette 2005/09)**

(54) **THERMOSETTING EPOXY RESIN COMPOSITION AND TRANSPARENT MATERIAL**
WÄRMEHÄRTBARE EPOXIDHARZZUSAMMENSETZUNG UND TRANSPARENTES MATERIAL
COMPOSITION DE RESINE EPOXY THERMODURCISSABLE, ET MATERIAU TRANSPARENT

(84) Designated Contracting States:
**BE DE GB**

(30) Priority: **25.08.2003 JP 2003300473**

(43) Date of publication of application:
**24.05.2006 Bulletin 2006/21**

(73) Proprietor: **Daicel Chemical Industries, Ltd.**
**Kita-ku,**
**Osaka-shi**
**Osaka 530-0001 (JP)**

(72) Inventors:
- **TAKAI, Hideyuki**
**Ohtake-shi, Hiroshima 739-0651 (JP)**
- **MAESHIMA, Hisashi**
**Hiroshima-shi,**
**Hiroshima 733-0861 (JP)**

(74) Representative: **Grünecker, Kinkeldey, Stockmair & Schwanhäusser**
**Anwaltssozietät**
**Leopoldstrasse 4**
**80802 München (DE)**

(56) References cited:
**JP-A- 9 124 767**
**JP-A- 11 001 631**
**JP-A- 61 213 204**
**JP-A- 2000 109 780**
**JP-A- 2003 073 457**
**JP-A- 2003 519 705**
**JP-A- 2004 099 467**
**JP-A- 2004 182 648**
**JP-A- 2004 204 228**
**JP-A- 2004 262 874**
**US-A1- 2003 059 618**
**US-A1- 2004 242 839**

- **PATENT ABSTRACTS OF JAPAN vol. 2003, no. 05, 12 May 2003 (2003-05-12) & JP 2003 013001 A (DAICEL CHEM IND LTD), 15 January 2003 (2003-01-15)**

EP 1 659 141 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to thermosetting resin compositions which yield cured articles excellent in optical transparency, dimensional stability, and heat resistance and to optically transparent materials using the compositions.

### Background Art

Display devices using liquid crystals or organic electroluminescence (organic EL) have been incorporated into mobile devices so as to reduce the sizes, thickness, and weights of the mobile devices. Glass is generally used as substrates and display components of the display devices using liquid crystals or organic EL. Any replacement for glass, however, is demanded, since glass has a high specific gravity and is susceptible to impact.

However, thermoplastic resins as the replacement are insufficient in heat resistance and optical transparency. Now-commercially-available aromatic epoxy resins are also insufficient in optical transparency of cured articles therefrom. Furthermore, nonaromatic epoxy resins are insufficient typically in heat resistance, optical transparency, and dimensional stability of cured articles therefrom, although they have relatively good optical transparency.

Japanese Unexamined Patent Application Publication (JP-A) No. 02-169620 discloses a technique of preparing an optically transparent substrate for liquid crystal panels, using a cured article of an alicyclic acid anhydride and an epoxy resin. The resulting article, however, is still insufficient in heat resistance and dimensional stability.

EP 1389615 describes an epoxy resin composition containing an alicyclic epoxy compound which can be cured by heating and wherein the cured product has good moisture and heat resistance and transparency.

JP 2003013001 describes an ultraviolet light curing type coating material comprising a compound having an alicyclic epoxy group in the molecule and not having an ester bond, a compound having an alicyclic epoxy group in the molecule and an ester group and/or an epoxy compound having a glycidyl group and a cationic polymerization initiator.

JP 09124767 discloses an insulating layer resin composition comprising an alicyclic epoxy compound and an epoxy compound with a structure containing an aromatic ring.

JP 2003073457 describes a resin composition comprising a cationic polymerizable organic compound having an epoxide structure, a polyether having hydroxyl groups at both ends and a cationic polymerization initiator.

JP 2000109780 discloses an ultraviolet hardening type adhesive composition for optical member comprising an epoxy compound liquid at normal temperature, a cationic photoinitiator and optionally a resin.

JP 11001631 describes an ultraviolet curable resin composition used as a coating agent for a metallic can comprising an alicyclilc epoxy compound, a phenol/cresol novalak epoxy resin.

WO 2001/051540 discloses a polymerizable preparation based on epoxides that contain silicon.

US 2003/0059618 describes an epoxy resin composition comprising an alicyclic epoxy compound an epoxy compound having a glycidyl group.

Accordingly, an object of the present invention is to provide a thermosetting resin composition that can yield a replacement typically for glass substrates which is excellent in heat resistance, dimensional stability, and optical transparency.

### Disclosure of Invention

The heat resistance and the dimensional stability of an epoxy resin can be increased while maintaining optical transparency by eliminating ester bonds from an alicyclic epoxy compound. The present invention has been solved on the basis of claims 1 to 3.

The present invention provides a thermosetting resin composition comprising 100 parts by weight of an epoxy composition (E) and 0.01 to 20 parts by weight of a cationic polymerization initiator (C) to 100 parts by weight of the epoxy composition (E), the epoxy composition (E) comprising 10 to 99 percent by weight of an ester-free alicyclic epoxy compound (A) represented by structural Formula (I) ; and 90 to 1 percent by weight of (3, 4-epoxy cyclohexyl) methyl (-3',4'- epoxy cyclohexane-carboxylate (B), the total of (A) and (B) being 100 percent by weight, further comprising 50 parts by weight or less of an epoxy-containing acrylic resin (D) differing from the components (A) and (B), to 100 parts by weight of the epoxy composition (E).

In an embodiment, the present invention provides the thermosetting resin composition, in which the epoxy-containing acrylic resin (D) further comprises hydroxyl group in addition to epoxy group.

Structural Formula (1):

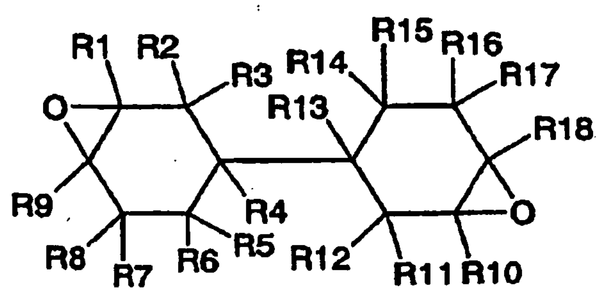

(1)

wherein R1 to R18 may be the same as or different from one another and are each hydrogen atom, a halogen atom, a hydrocarbon group which may comprise oxygen atom or a halogen atom, or a substituted or unsubstituted alkoxy group.

In addition, the present invention provides an optically transparent material prepared by thermally curing the thermosetting resin composition of the present invention.

Best Mode for Carrying Out the Invention

The present invention will be specifically described in detail below.

Thermosetting resin compositions in the present invention are resin compositions that will undergo cationic polymerization by heating and be cured. They comprise 100 parts by weight of an epoxy composition (E) and 0.01 to 20 parts by weight of a cationic polymerization initiator (C), the epoxy composition (E) comprising 10 to 99 percent by weight of the ester-free alicyclic epoxy compound (A), and 90 to 1 percent by weight of the epoxy compound (B) the total of (A) and (B) being 100 percent by weight; or comprise 100 parts by weight of an epoxy composition (E), 0.01 to 20 parts by weight of a cationic polymerization initiator (C), and 50 parts by weight or less of an acrylic resin (D), the epoxy composition (E) comprising 10 to 99 percent by weight of the ester-free alicyclic epoxy compound (A), and 90 to 1 percent by weight of the epoxy compound (B) the total of (A) and (B) being 100 percent by weight, and the epoxy-containing acrylic resin (D) differing from the epoxy compounds (A) and (B).

(A) Ester-free Alicyclic Epoxy Compound (also referred to as the component (A))

The ester-free alicyclic epoxy compound (A) for use in the present invention is a compound having two alicyclic epoxy groups and no ester bond per molecule, represented by following Formula (1).

In the ester-free alicyclic epoxy compounds of Formula (1), R1 to R18 may be the same as or different from one another and each represent hydrogen atom, a halogen atom, a hydrocarbon group having one to six carbon atoms which may comprise oxygen atom or a halogen atom, or a substituted or unsubstituted alkoxy group having one to six carbon atoms.

The ester-free alicyclic epoxy compounds of Formula (1) can be produced, for example, by oxidizing an unsaturated compound of following Formula (2) having a bicyclohexyl-3,3'-diene skeleton with an organic percarboxylic acid or aqueous hydrogen peroxide solution.

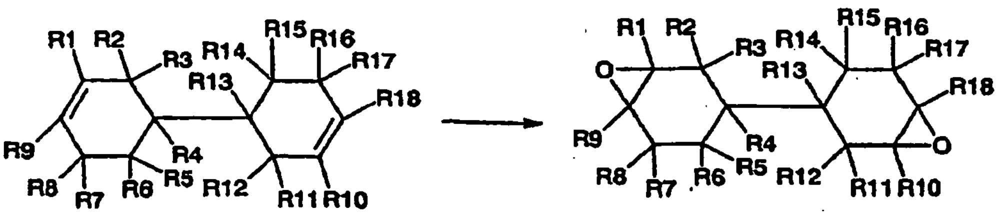

(2) (1)

In the ester-free alicyclic epoxy compounds represented by Formula (3), R1 to R12 may be the same as or different from one another and each represent hydrogen atom, a halogen atom, a hydrocarbon group having one to six carbon atoms which may comprise oxygen atom or a halogen atom, or a substituted or unsubstituted alkoxy group having one to six carbon atoms.

(B) Epoxy Compound Differing from (A) (also referred to as the component (B))

The epoxy compound (B) differing from the epoxy compound (A) for use in the present invention is (3,4-epoxycyclohexyl)methyl 3',4'-epoxycyclohexanecarboxylate,

When the proportion of the component (A) as the ester-free alicyclic epoxy compound is large, the optical transparency can be maintained even if an ester-containing alicyclic epoxy compound is used as the component (B).

However, the content of a compound or compounds having an ester bond in the epoxy composition (E) should be less than 50 percent by weight.

(D) Epoxy-containing Acrylic Resin (also referred to as the component (D))

The epoxy-containing acrylic resin (D) for use in the present invention is an acrylic resin which may have, where necessary, one or more hydroxyl groups in addition to epoxy groups. It can be prepared by polymerizing an epoxy-containing monomer or by copolymerizing an epoxy-containing monomer and a hydroxy-containing monomer and is another epoxy compound than the components (A) and (B).

The epoxy-containing monomer includes compounds each having a glycidyl group or a terminal epoxy group analogous thereto; and (meth)acrylic esters typically having an alicyclic epoxy. Specific examples thereof are glycidyl (meth)acrylate, 2-methyl-glycidyl (meth)acrylate, epoxidized isoprenyl (meth)acrylate, and epoxy-containing (meth)acrylates CYM M-100 and CYM A-200 available from Daicel Chemical Industries, Ltd. having the following structural formulae.

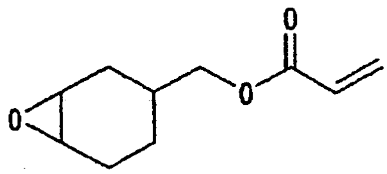

[CYM A-200]

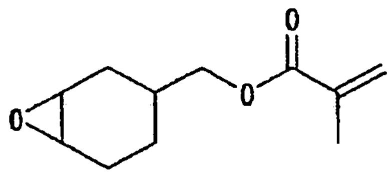

[CYM M-100]

The hydroxy-containing monomer includes hydroxyethyl (meth)acrylate, and monomers prepared by modifying hydroxyl groups of these hydroxy-containing (meth)acrylates with caprolactone. The modified monomers are commercially available under the trade names of FM-1, FM-3, FM-10, FA-1, and FA-3 from Daicel Chemical Industries, Ltd.

Regular alkyl (meth)acrylate monomers can be used as monomers for the epoxy-containing acrylic resin (D), in addition to the epoxy-containing monomer and the hydroxy-containing monomer.

Examples of regular alkyl (meth)acrylate monomers are (meth)acrylic acid esters of alkyls or cycloalkyls each having one to twenty-four carbon atoms, such as methyl (meth)acrylate, ethyl (meth)acrylate, n-, i-, or t-butyl (meth) acrylate, hexyl (meth)acrylate, octyl (meth)acrylate, lauryl (meth)acrylate, stearyl (meth)acrylate, and cyclohexyl (meth) acrylate; (meth)acrylic esters of hydroxyalkyls each having one to eight carbon atoms, such as 2-hydroxyethyl (meth) acrylate, 2-hydroxypropyl (meth)acrylate, and 4-hydroxybutyl (meth)acrylate; $\alpha,\beta$-ethylenically unsaturated carboxylic acids such as (meth)acrylic acids, maleic acid, itaconic acid, and crotonic acid; (meth)acrylamides and derivatives thereof, such as (meth)acrylamides, N-methyl(meth)acrylamides, N-ethyl(meth)acrylamides, diacetone (meth)acrylamides, N-methylol(meth)acrylamides, N-methoxy(meth)acrylamides, and N-butoxy(meth)acrylamides; aromatic vinyl monomers, such as styrene, vinyltoluene, and $\alpha$-methylstyrene; vinyl propionate, vinyl acetate, (meth)acrylonitrile, vinyl pivalate, VEOVA monomer (available from Shell Chemical Co., Ltd.; vinyl ester of a branched fatty acid), SILAPLANE FM 0711, SILAPLANE FM 0721, and SILAPLANE FM 0725 (each available from Chisso Corporation; polydimethylsiloxane macro monomers having a terminal methacryloyl group), and other vinyl monomers.

A polymerization initiator can be used to produce the epoxy-containing acrylic resin (D) from the above-mentioned monomers. The polymerization initiator can be, for example, any of potassium persulfate, ammonium persulfate, benzoyl peroxide, hydrogen peroxide, di-t-butyl peroxide, dicumyl peroxide, 2,4-dichlorobenzoyl peroxide, decanoyl peroxide, lauryl peroxide, cumene hydroperoxide, t-butyl hydroperoxide, acetyl peroxide, methyl ethyl ketone peroxide, succinic peroxide, diacetyl peroxydicarbonate, t-butyl peroxyacetate, AIBN (2,2'-azobisisobutyronitrile), ABN-E (2,2'-azobis(2-methylbutyronitrile)), ABN-V (2,2'-azobis(2,4-dimethylvaleronitrile)), and Perbutyl O (t-butyl peroxy-2-ethylhexanoate).

The amount of the polymerization initiator is 1 to 10 parts by weight, and preferably 3 to 6 parts by weight, to 100 parts by weight of the monomers. Part of the polymerization initiator may be charged into a reactor beforehand. Alternatively, the polymerization initiator can be incorporated into the monomers, fed separately without incorporating

into the monomers, or subsequently fed after the charging of the monomers.

The polymerization temperature is 90°C to 130°C, and preferably 100°C to 120°C. If the temperature exceeds 130°C, the polymerization may become unstable and yield large amounts of high molecular weight compounds. In contrast, if it is lower than 90°C, the polymerization time may become unfavorably long.

The epoxy group content of the epoxy-containing acrylic resin (D) is 4% to 12%, and preferably 5.5% to 11.5% in terms of oxirane oxygen content. The amount of hydroxyl groups in the acrylic resin having hydroxyl groups in addition to epoxy groups is preferably within the range of 1 to 300 (unit: mg-KOH/g) and more preferably within the range of 1.5 to 250 (unit: mg-KOH/g) in terms of hydroxyl value.

(C) Cationic Polymerization Initiator (also referred to as the component (C))

The cationic polymerization initiator (C) for use in the present invention is a compound that forms cation species as a result of heating so as to initiate the polymerization. Examples thereof are cationic polymerization initiators such as hexafluoroantimonate salts, pentafluorohydroxyantimonate salts, hexafluorophosphate salts, and hexafluoroarsenate salts represented by following Formulae (I) to (XV):

$$Ar_2I^+ \cdot X^- \qquad (I)$$

$$Ar_3S^+ \cdot X^- \qquad (II)$$

wherein Ar represents an aryl group such as phenyl group; and $X^-$ represents $PF_6^-$, $SbF_6^-$, or $AsF_6^-$,

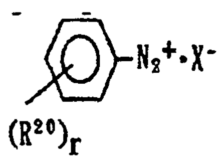

(III)

wherein R20 represents an alkyl or alkoxy group having one to twelve carbon atoms; r represents an integer of 0 to 3; and $X^-$ represents $PF_6^-$, $SbF_6^-$, or $AsF_6^-$,

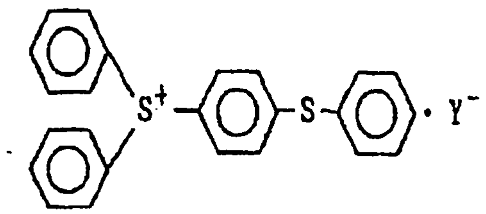

(IV)

wherein $Y^-$ represents $PF_6^-$, $SbF_6^-$, $AsF_6^-$, or $SbF_5(OH)^-$,

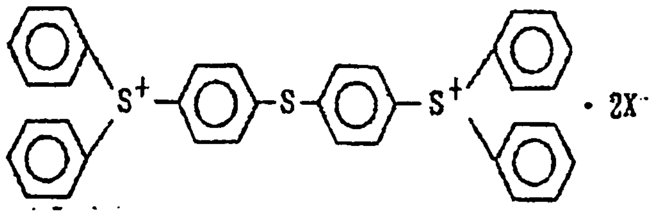

(V)

wherein $X^-$ represents $PF_6^-$, $SbF_6^-$, or $AsF_6^-$,

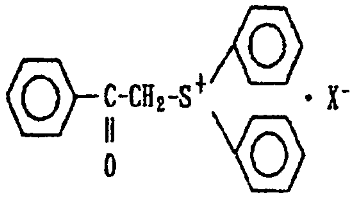

(VI)

wherein $X^-$ represents $PF_6^-$, $SbF_6^-$, or $AsF_6^-$,

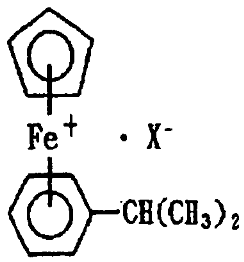

(VII)

wherein $X^-$ represents $PF_6^-$, $SbF_6^-$, or $AsF_6^-$,

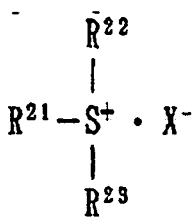

(VIII)

wherein R21 represents an aralkyl group having seven to fifteen carbon atoms or an alkenyl group having three to nine carbon atoms; R22 represents a hydrocarbon group having one to seven carbon atoms or hydroxyphenyl group; R23 represents an alkyl group having one to five carbon atoms which may contain oxygen atom or sulfur atom; and $X^-$ represents $PF_6^-$, $SbF_6^-$, or $AsF_6^-$,

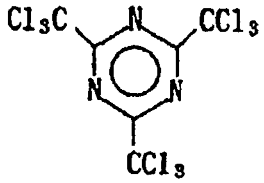

(IX)

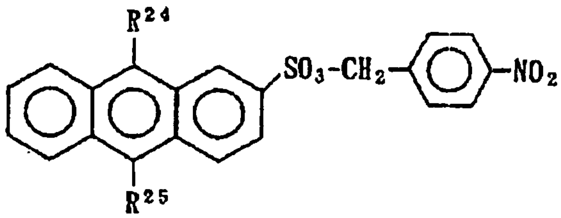

(X)

wherein R24 and R25 each independently represent an alkyl or alkoxy group having one to twelve carbon atoms,

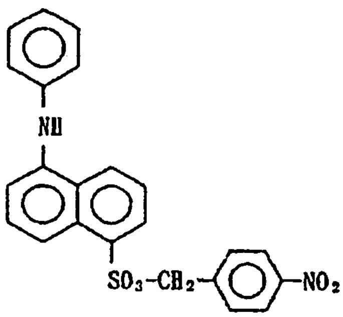

(XI)

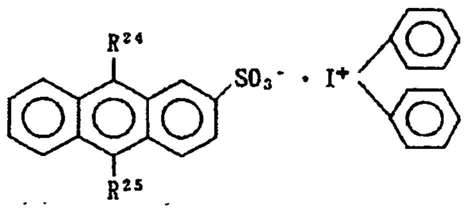

(XII)

wherein R24 and R25 each independently represent an alkyl or alkoxy group having one to twelve carbon atoms,

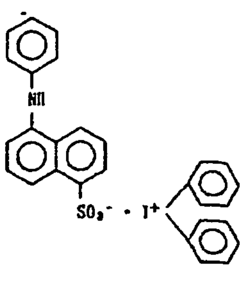

(XIII)

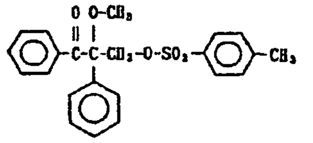

(XIV)

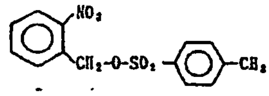

(XV)

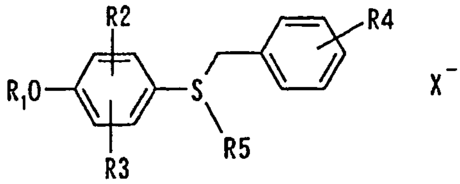

wherein R1 represents one of hydrogen atom, $COCH_3$ group, and $COOCH_3$ group; each of R2 and R3 represents one of hydrogen atom, a halogen, and an alkyl group having one to four carbon atoms; R4 represents one of hydrogen atom, methyl group, methoxy group, and a halogen atom; R5 represents an alkyl group having one to four carbon atoms; and $X^-$ represents one of $SbF_6^-$, $AsF_6^-$, $PF_6^-$, and $BF_4^-$,

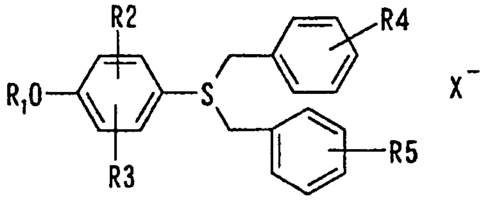

wherein R1 represents one of hydrogen atom, acetyl group, methoxycarbonyl group, methyl, epoxycarbonyl group, t-butoxycarbonyl group, benzoyl group, phenoxycarbonyl group, benzyloxycarbonyl group, 9-fluorenylmethoxycarbonyl group, and p-methoxybenzylcarbonyl group; each of R2 and R3 represents one of hydrogen atom, a halogen atom, and an alkyl group having one to four carbon atoms; each of R4 and R5 represents one of hydrogen atom, methyl group, methoxy group, and a halogen atom; and $X^-$ represents one of $SbF_6^-$, $AsF_6^-$, $PF_6^-$, and $BF_4^-$,

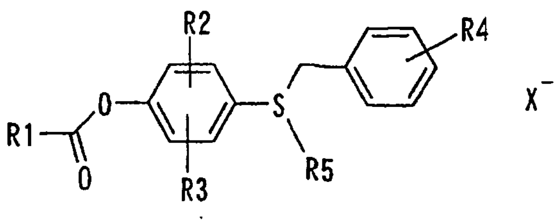

wherein R1 represents one of ethoxy group, phenyl group, phenoxy group, benzyloxy group, chloromethyl group, dichloromethyl group, trichloromethyl group, and trifluoromethyl group; each of R2 and R3 represents one of hydrogen atom, a halogen atom, and an alkyl group having one to four carbon atoms; R4 represents one of hydrogen, methyl group, methoxy group, and a halogen atom; R5 represents one of alkyl groups each having one to four carbon atoms; and $X^-$ represents one of $SbF_6^-$, $AsF_6^-$, $PF_6^-$, and $BF_4^-$,

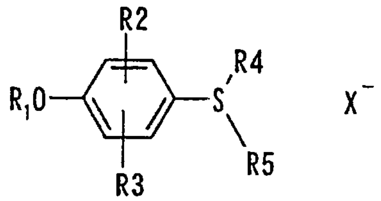

wherein R1 represents one of hydrogen atom, acetyl group, methoxycarbonyl group, methyl group, epoxycarbonyl group, t-butoxycarbonyl group, benzoyl group, phenoxycarbonyl group, benzyloxycarbonyl group, 9-fluorenylmethoxycarbonyl group, and p-methoxybenzylcarbonyl group; each of R2 and R3 represents one of hydrogen atom, a halogen atom, and an alkyl group having one to four carbon atoms; each of R4 and R5 represents one of methyl group and ethyl group; and $X^-$ represents one of $SbF_6^-$, $AsF_6^-$, and $PF_6^-$.

The cationic polymerization initiator (C) can be a commercially available product. Examples of the commercially available product are sulfonium salt cationic polymerization initiators available under the trade names of SI-100L and SI-60L from Sanshin Chemical Industry Co., Ltd., and CP-66 from Asahi Denka Kogyo K.K.

Apart from these cationic polymerization initiators, a combination of a chelate compound of aluminum or titanium with a beta-diketone and a silanol-containing compound or bisphenol-S can be used. The beta-diketone to coordinate with aluminum or titanium includes acetylacetone and acetoacetic esters. Examples of these chelate compounds are aluminum trisethylacetoacetate (available under the trade name of ALCH-TR from Kawaken Fine Chemicals Co., Ltd.) and aluminum trisacetylacetonate.

The thermosetting resin compositions of the present invention may further comprise any of pigments such as coloring pigments and extender pigments, polyol resins, phenol resins, acrylic resins, polyester resins, polyolefin resins, epoxidized polybutadiene resins and other modified resins, inorganic or organic resin fine particles, solvents, and dyestuffs, in addition to the components (A), (B), and (C), and the component (D) which is added according to necessity.

The content of the modified resins is 0.1 to 20 parts by weight, and preferably 5 to 10 parts by weight, to 100 parts by weight of the epoxy composition (E).

The thermosetting resin compositions of the present invention can be prepared according to a conventional procedure. For example, they can be prepared by stirring the above-mentioned components to be homogenous using a stirrer such as dissolver. The temperature upon stirring is preferably within the range of 10°C to 60°C.

The epoxy composition (E) for use in the present invention comprises 10 to 99 percent by weight, preferably 30 to 98 percent by weight, and more preferably 50 to 97 percent by weight of the component (A), and 90 to 1 percent by weight, preferably 70 to 2 percent by weight, and more preferably 50 to 3 percent by weight of the component (B). If the content of the component (A) is less than 10 percent by weight, the resulting cured article deteriorates in optical transparency and toughness. In contrast, if the content of the component (A) exceeds 99 percent by weight, it is economically unfavorable.

The proportion of the component (C) in the thermosetting resin compositions of the present invention is 0.01 to 20 parts by weight, preferably 0.1 to 10 parts by weight, and more preferably 1 to 5 parts by weight, to 100 parts by weight of the epoxy composition (E).

The thermosetting resin compositions of the present invention, in a second embodiment, further comprise the component (D) relative to 100 parts by weight of the epoxy composition (E). Addition of the component (D) further improves the optical transparency and toughness of the cured article. The amount of the component (D) is 1 to 50 parts by weight, preferably 2 to 30 parts by weight, and more preferably 5 to 20 parts by weight, to 100 parts by weight of the epoxy composition (E). If the amount of the component (D) is less than 1 part by weight, the effect of adding the component (D) may not be exerted. In contrast, if the amount of the component (D) exceeds 50 parts by weight, the resulting cured article may have decreased dimensional stability and heat resistance.

The thermosetting resin compositions of the present invention can be cured by heating at temperatures of 40°C to 250°C, and preferably 45°C to 240°C, for 3 to 12 hours.

## EXAMPLES

The present invention will be specifically described with reference to several examples bellow.

All percentages and parts are by weight, unless otherwise specified.

[SYNTHESIS EXAMPLE 1] (A) Synthesis of ester-free alicyclic epoxy compound A-1

In a reactor were placed 406 g of bicyclohexyl-3,3'-diene, an example of the compounds of Formula (2), and

1217 g of ethyl acetate. While passing nitrogen gas through the gas phase and keeping the inner temperature of the reactor to 37.5°C, 457 g of a 30 percent by weight solution of peroxyacetic acid in ethyl acetate (moisture content: 0.41 percent by weight) was added dropwise over about 3 hours. After the completion of dropwise addition, the mixture was stirred at 40°C for one hour and the epoxidation completed. Next, the reactor was cooled to 30°C, and the crude reaction mixture was washed with water. Subsequently, low boiling components were removed from the crude reaction mixture at 70°C and 20 mmHg (2660 Pa) to yield 415 g of an epoxy compound (bicyclohexyl-3,4,3',4'-diepoxide). The obtained epoxy compound is hereinbelow referred to as A-1. A-1 has an oxirane oxygen content of 14.7 percent by weight and was obtained in a yield of 85%.

$^1$H-NMR analysis of A-1 revealed that a peak derived from internal double bond at $\delta$ of around 4.5 to 5 ppm disappeared, and that a proton peak derived from epoxy group formed at $\delta$ of around 2.9 to 3.1 ppm, verifying that A-1 is an ester-free alicyclic epoxy compound having the structure of Formula (1). [SYNTHESIS EXAMPLES 4 and 5] Synthesis of epoxy-containing acrylic resin (D)

An aliquot of 3,4-epoxycyclohexylmethyl 3',4'-epoxycyclohexanecarboxylate (trade name: CEL-2021) (233 g) in Table 1 was placed in a flask equipped with a stirrer, a reflux condenser, a dropping funnel, and a thermometer. The temperature was raised to 105°C to 110°C while blowing air thereinto, and the monomer and the initiator in Table 1 were added dropwise over 3 hours. After the completion of dropwise addition, the mixture was stirred for one hour, and the reaction completed.

The acrylic resins D-1 and D-2 obtained in SYNTHESIS EXAMPLES 4 and 5, respectively, have hydroxyl groups in addition to epoxy groups.

Table 1

| Synthesis of Component (D) | | | SYNTHESIS EXAMPLE 4 | SYNTHESIS EXAMPLE 5 |
|---|---|---|---|---|
| Monomer | Alicyclic epoxy resin | CEL-2021 (g) | 233 | 233 |
| | Acrylic monomer | MMA (g) | 55 | 65 |
| | | n-BMA (g) | 15 | 10 |
| | | HEMA (g) | 20 | 15 |
| | | CYM M-100 (g) | 10 | |
| | | GMA (g) | | 10 |
| Polymerization initiator | | AIBN (g) | 3 | 3 |
| Polymerization inhibitor | | MEHQ (g) | 0.3 | 0.3 |
| Component (D) | | | D-1 | D-2 |
| Analytical data | | Hydroxyl value (mg-KOH/g) | 23.6 | 18.3 |
| | | Oxirane oxygen content (wt. %) | 8.0 | 8.5 |
| MMA: Methyl methacrylate<br>n-BMA: n-Butyl methacrylate<br>HEMA: Hydroxyethyl methacrylate<br>GMA: Glycidyl methacrylate<br>AIBN: Azobisisobutyronitrile<br>MEHQ: p-Methoxyphenol | | | | |

[EXAMPLES 1 to 11 and COMPARATIVE EXAMPLES 1 to 3]

A series of thermosetting resin compositions was prepared by placing the individual components shown in Tables 2 and 3 in a 500-ml flask equipped with a stirrer and a thermometer, followed by stirring at 30°C for 20 minutes. The resulting thermosetting resin compositions were poured into a Teflon (registered trademark) molding form 1 mm deep on a glass plate coated with a mold releasing film, and another glass plate coated with a mold releasing film was placed thereon. The resin compositions were cured under the following conditions to yield test pieces.

In EXAMPLES 1, 3, 4, 8, and 9, and COMPARATIVE EXAMPLES 1 and 2, the resin compositions were cured

by heating at 50°C for 4 hours and further heating at 180°C for 2 hours.

In EXAMPLES 2, 5, and 10, and COMPARATIVE EXAMPLE 3, the resin compositions were cured by heating at 70°C for 3 hours and further heating at 180°C for 2 hours.

The glass transition point, thermal decomposition temperature, dimensional stability, and optical transparency of the thus-obtained cured test pieces were determined. The results are shown in Tables 2 and 3.

The determination and evaluation methods used in the examples and comparative examples are shown below.

* Determination of glass transition point: The determination was performed under a load of 50 g at a rate of temperature rise of 5°C/min using TMA SS6100 (Seiko Instruments, Inc.).
* Determination of thermal decomposition temperature: The thermal decomposition temperature was determined using TG-DTA. The temperature at which 3% weight loss was obtained was defined as the thermal decomposition temperature.
* Determination of coefficient of cubic expansion as dimensional stability: The specific gravity of a sample resin composition was determined with a pycnometer, and the specific gravity of a sample test piece as a cured article was determined by the underwater replacement method. The coefficient of cubic expansion was determined by calculation according to the following equation. The dimensional stability upon curing is better with the coefficient of cubic expansion approaching zero.

$$\{1-[(\text{Specific gravity of cured article})/(\text{Specific gravity of composition})]\} \times 100\ (\%)$$

* Determination of optical transparency: The transmittance at 450 nm was measured using a transmissometer.

Table 2 (Components (A) to (D): Unit: g)

| Component | | EXAMPLE | | | | | COM.EX. |
|---|---|---|---|---|---|---|---|
| | | 1 | 2 | 3 | 4 | 5 | 1 |
| (A) | A-1 | 80 | 75 | 97 | 65 | 50 | |
| | A-2 | | | | | | |
| | A-3 | | | | | | |
| (B) | CEL-2021P | 15 | 15 | 3 | 30 | 30 | 60 |
| | EHPE-3150 | 5 | | | | 20 | |
| (C) | SI-60L | 0.6 | | 0.6 | 0.6 | | 0.8 |
| | ALCH-TR | | 0.2 | | | 0.15 | |
| | Bisphenol-S | | 0.2 | | | 0.15 | |
| (D) | D-1 | | 10 | | | | 40 |
| | D-2 | | | | 5 | | |
| Glass transition point (°C) | | 256 | 222 | 275 | 208 | 194 | 161 |
| Thermal decomposition temperature (°C) | | 245 | 233 | 256 | 219 | 210 | 188 |
| Coefficient of cubic expansion (%) | | -0.85 | -1.36 | -0.06 | -1.92 | -2.02 | -3.79 |
| Optical transparency (%) | | 89.5 | 88.3 | 90.5 | 93.1 | 92.9 | 96.3 |

Table 3 (Components (A) to (C): Unit: g)

| Component | | EXAMPLE | | | COM. EX. | |
|---|---|---|---|---|---|---|
| | | 8 | 9 | 10 | 2 | 3 |
| (A) | A-1 | 60 | 20 | 30 | | |
| | A-2 | | | | | |
| (B) | CEL-2021P | | | 40 | | 50 |
| | EHFE-3150 | 20 | 40 | 30 | 50 | |
| | HBE-100 | | | | 50 | 50 |
| | CME-100 | 20 | 40 | | | |
| (C) | SI-100L | 0.6 | 0.5 | | 0.6 | |
| | ALCH-TR | | | 0.2 | | 0.2 |
| | Bisphenol-S | | | 0.2 | | 0.2 |
| Glass transition point (°C) | | 211 | 189 | 192 | 190 | 143 |
| Thermal decomposition temperature (°C) | | 231 | 202 | 210 | 207 | 178 |
| Coefficient of cubic expansion (%) | | -1.01 | -1.79 | -1.83 | -3.14 | -4.63 |
| Optical transparency (%) | | 89.9 | 91.2 | 94.5 | 92.3 | 83.2 |

Industrial Applicability

The thermosetting resin compositions of the present invention can be efficiently cured in the presence of a cationic polymerization initiator to yield cured articles which are excellent in optical transparency, heat resistance, and dimensional stability.

## Claims

1. A thermosetting resin composition comprising 100 parts by weight of an epoxy composition (E) and 0.01 to 20 parts by weight of a cationic polymerization initiator (C) to 100 parts by weight of the epoxy composition (E), the epoxy composition (E) comprising 10 to 99 percent by weight of an ester-free alicyclic epoxy compound (A) represented by structural Formula (1):

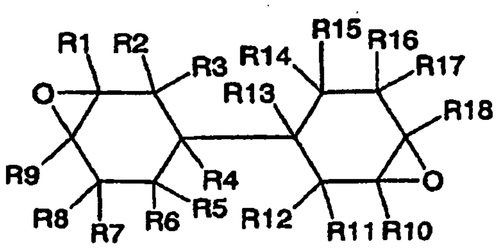

(1)

wherein R1, R2, R3, R4, R5, R6, R7, R8, R9, R10, R11, R12, R13, R14, R15, R16, R17 and R18 may be the same as or different from one another and are each hydrogen atom, a halogen atom, a hydrocarbon group which may comprise oxygen atom or a halogen atom, or a substituted or unsubstituted alkoxy group and
90 to 1 percent by weight of (3,4-epoxycyclohexyl)methyl-3',4'-epoxycyclohexanecarboxylate (B), the total of (A) and (B) being 100 percent by weight, further comprising 50 parts by weight or less of an epoxy-containing acrylic resin (D) differing from the components (A) and (B), to 100 parts by weight of the epoxy composition (E).

2. The thermosetting resin composition of claim 1, wherein the epoxy-containing acrylic resin (D) further comprises

hydroxyl group in addition to epoxy group.

**3.** An optically transparent material prepared by thermally curing the thermosetting resin composition of any one of claims 1 or 2.

## Patentansprüche

**1.** Wärmehärtbare Harzzusammensetzung, umfassend 100 Gewichtsteile einer Epoxyzusammensetzung (E) und 0,01 bis 20 Gewichtsteile eines kationischen Polymerisationsinitiators (C) auf 100 Gewichtsteile der Epoxyzusammensetzung (E), wobei die Epoxyzusammensetzung (E) 10 bis 99 Gew.-% einer esterfreien alicyclischen Epoxyverbindung (A), die durch Strukturformel (1) wiedergegeben ist:

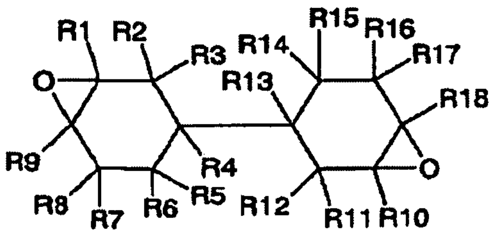

(1)

worin R1, R2, R3, R4, R5, R6, R7, R8, R9, R10, R11, R12, R13, R14, R15, R16, R17 und R18 gleich oder voneinander verschieden sein können und jeweils ein Wasserstoffatom, ein Halogenatom, eine Kohlenwasserstoffgruppe, welche ein Sauerstoffatom oder ein Halogenatom umfassen kann, oder eine substituierte oder unsubstituierte Alkoxygruppe sind, und
90 bis 1 Gew.-% (3,4-Epoxycyclohexyl)methyl-3',4'-epoxycyclohexancarboxylat (B) umfasst, wobei die Summe von (A) und (B) 100 Gewichtsprozent beträgt, außerdem umfassend 50 Gewichtsteile oder weniger eines epoxyhaltigen Acrylharzes (D), das von den Komponenten (A) und (B) verschieden ist, auf 100 Gewichtsteile der Epoxyzusammensetzung (E).

**2.** Wärmehärtbare Harzzusammensetzung nach Anspruch 1, wobei das epoxyhaltige Acrylharz (D) außerdem eine Hydroxylgruppe zusätzlich zu einer Epoxygruppe umfasst.

**3.** Optisch transparentes Material, hergestellt durch Wärmehärten der wärmehärtbaren Harzzusammensetzung nach einem der Ansprüche 1 oder 2.

## Revendications

**1.** Composition de résine thermodurcissable comprenant 100 parties en poids d'une composition époxy (E) et 0,01 à 20 parties en poids d'un initiateur de polymérisation cationique (C) à 100 parties en poids de la composition époxy (E), la composition époxy (E) comprenant 10 à 99 % en poids d'un composé époxy (A) alicyclique sans esters représenté par la formule structurale (1) :

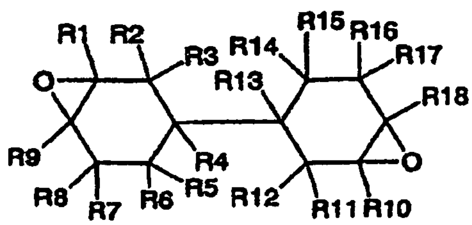

(1)

dans laquelle R1, R2, R3, R4, R5, R6, R7, R8, R9, R10, R11, R12, R13, R14, R15, R16, R17 et R18 peuvent être

identiques ou différents les uns des autres et sont chacun un atome d'hydrogène, un atome d'halogène, un groupe hydrocarboné pouvant comprendre un atome d'oxygène ou un atome d'halogène, ou un groupe alcoxy substitué ou non substitué et 90 à 1 % en poids de (3,4-époxycyclohexyl)méthyl-3',4'-époxycyclohexanecarboxylate (B), le total de (A) et de (B) étant de 100 % en poids, comprenant en outre 50 parties en poids ou moins de résine acrylique (D) contenant de l'époxy différente des composants (A) et (B), à 100 parties en poids de la composition époxy (E).

2. Composition de résine thermodurcissable selon la revendication 1, dans laquelle la résine acrylique (D) contenant de l'époxy comprend en outre un groupe hydroxyle en plus du groupe époxy.

3. Matériau optiquement transparent préparé en faisant durcir thermiquement la composition de résine thermodurcissable selon l'une quelconque des revendications 1 ou 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2169620 A
- EP 1389615 A
- JP 2003013001 B
- JP 09124767 B
- JP 2003073457 B
- JP 2000109780 B
- JP 11001631 B
- WO 2001051540 A
- US 20030059618 A